# EUROPÄISCHE PATENTANMELDUNG

(11) **EP 3 767 894 A1**
(43) Veröffentlichungstag der Anmeldung: **20.01.2021**
(21) Anmeldenummer: 19187304.1
(22) Anmeldetag: 19.07.2019
(51) Int. Cl.: H04L 12/46, G06F 9/455

(54) **VERFAHREN ZUR DATENKOMMUNIKATION, ARBEITSKNOTEN, CLUSTER, INDUSTRIELLES NETZWERK, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Die Erfindung betrifft ein Verfahren zur Datenkommunikation in einem industriellen Netzwerk (1), an dem mehrere Arbeitsknoten (8-11) eines Clusters (12) teilnehmen, wobei wenigstens zwei der Knoten (8-11) über einen Router (4) und/oder eine Firewall (5) und/oder einen Proxy-Server miteinander verbunden sind, bei dem
- ein Knoten-VPN-Netzwerk (14) aufgebaut ist oder wird, über das Knoten (8-11) des Clusters (12) mit einem zentralen Knoten-VPN-Server (15) verbunden sind,
- zwischen Knoten (8-11) des Clusters (12) Daten über den Knoten-VPN-Server (15) übertragen werden,
- für wenigstens ein Paar von zwei Knoten (8-11) überwacht wird, wie viel Datenverkehr zwischen den beiden Knoten (8-11) über den Knoten-VPN-Server (15) übertragen wird,
- für den Fall, dass zwischen den beiden Knoten (8-11) wenigstens eines Paares eine Verkehrsmenge und/oder Verkehrsrate beobachtet wird, welche einen Schwellwert gegebenenfalls über einen vorgegebenen Zeitraum hinweg überschreitet, überprüft wird, ob eine direkte Verbindung (17) möglich ist.

Darüber hinaus betrifft die Erfindung einen Arbeitsknoten (8-11) eines Clusters (12), einen Cluster (12) mit mehreren Arbeitsknoten (8-11), ein industrielles Netzwerk (1), ein Computerprogramm und ein computerlesbares Medium.

## Beschreibung

Die Erfindung betrifft ein Verfahren zur Datenkommunikation in einem industriellen Netzwerk, an dem mehrere Arbeitsknoten eines Clusters teilnehmen. Darüber hinaus betrifft die Erfindung einen Arbeitsknoten eines Clusters, einen Cluster mit mehreren Arbeitsknoten, ein industrielles Netzwerk, ein Computerprogramm und ein computerlesbares Medium.

Im Bereich der allgemeinen IT hat sich die so genannte Container-Technologie bewährt. Anwendungs-Container stellen in der Regel "abgekapselte" Einheiten dar, die unabhängig voneinander ausgeführt werden können, egal wo sie sich befinden. Ähnlich wie bei virtuellen Maschinen sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. die Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Containerisierung erlauben es, Funktionen einfach und bequem modular zu verpacken, zu transportieren und schließlich in den operativen Bereich auszurollen. Klassische Einsatzgebiete von Containern liegen beispielsweise darin Applikationen, etwa eine Datenbank oder einen Web-Front-End, bequem zu verpacken.

Beispiele für Software für die Container-Virtualisierung/Containerisierung sind etwa "Docker" oder "rkt" (gesprochen "rocket", siehe etwa https://coreos.com/rkt/ sowie https://www.docker.com bzw. EP 3 267 351 A1 zu Docker). Ein Beispiel für ein Orchestrierungssystem/-tool bzw. eine Orchestrierungs-Software für Container ist durch "Kubernetes" gegeben (siehe etwa https://kubernetes.io/ sowie https://de.wikipedia.org/wiki/Kubernetes)
Mit Container-Orchestrierungs-Systemen wie Kubernetes werden sogenannte "Pods" orchestriert, welche die kleinste einsetzbare Einheit darstellen. Pods sind die Arbeiterprozesse, die auf "Nodes" laufen. Ein Pod beinhaltet wenigstens einen Container. Ein Node ist ein Arbeitsknoten eines mehrere Arbeitsknoten umfassenden Clusters. Ein Arbeitsknoten/Knoten/Node (Begriffe werden vorliegend synonym verwendet) kann beispielsweise durch eine physische oder auch virtuelle Maschine eines Clusters gegeben sein.

Mittels der Orchestrierungs-Tools wie Kubernetes können die Arbeitslasten in Form von Software-Containern bzw. Pods auf die verfügbaren Arbeitsknoten eines Clusters verteilt werden. Weiterhin kann auch die Container- und Knotenverfügbarkeit überprüft werden und beispielsweise gestörte Container können automatisch neu gestartet werden.

Der Cluster mit seinen Arbeitsknoten wird dabei in der Regel von einem wenigstens einem Controller bzw. Master gesteuert, im Falle von Kubernetes über den sogenannten "Kubernetes-Master". Die Arbeitsknoten eines Clusters können räumlich verteilt angeordnet sein.

Nach Auffassung der Anmelderin hat die Container-Virtualisierung auch im Bereich der industriellen Automatisierungstechnik ein großes Potential.

Kubernetes geht von einem Netzwerk aus, in welchem jeder Arbeitsknoten jeden anderen Arbeitsknoten IP-technisch erreichen kann. Das heißt, eine Kommunikation "jeder zu jedem" auf verschiedenen UDP/TCP-Ports wird angenommen.

Kubernetes baut ein Overlay-Netzwerk zwischen den Knoten auf (z.B. VXLAN). Dies setzt eine bidirektionale Erreichbarkeit zwischen den Arbeitsknoten voraus. Zusätzlich müssen vom Backend (z.B. Rancher) zu jedem Knoten Verbindungen aufgebaut werden.

Im industriellen Umfeld ist hierbei problematisch, dass industrielle Netzwerke oftmals nicht flach, sondern segmentiert sind, etwa durch Router und/oder Firewalls und/oder Proxys in mehrere Netzwerksegmente unterteilt sind. Es kann sein, dass Arbeitsknoten in unterschiedlichen Netzwerksegmenten angeordnet sind, insbesondere Router und/oder Firewalls und/oder Proxys zwischen Knoten vorhanden sind. Bei dem offenen Industrial-Ethernet-Standard für die Automatisierung PROFINET beispielsweise (siehe etwa https://de.wikipedia.org/wiki/Profinet) ist dies u.a. durch das Zellenschutzkonzept motiviert, also durch das Konzept zum Schutz von Arbeitszellen eines industriellen Netzwerkes bzw. einer mehrere Zellen umfassenden Automatisierungsmaschine bzw. -anlage. In einem solchen Fall ist die pauschale Erreichbarkeit der Knoten zueinander nicht gegeben. Die bidirektionalen Verbindungen werden teilweise durch technische Merkmale (beispielsweise NAT, Proxy, ...) oder auch durch organisatorische Richtlinien (Firewall, Policies, ...) verhindert. Solche Schutzkonzepte sind oftmals anwendungs- bzw. kundenspezifisch und eine Veränderung dieser ist mitunter nicht gewünscht oder auch nicht möglich.

Nach Auffassung der Anmelderin könnte eine Möglichkeit, dieses Problem zu umgehen darin bestehen, zur Überwindung beispielsweise von Routern, NATs, Proxy Servern, Firewalls oder dergleichen virtuelle private Netzwerke (VPNs) genutzt werden. Hierfür kann jeder Arbeitsknoten einen VPN-Client erhalten und die Knoten können sich alle zu einem zentralen, von allen erreichbaren Knoten-VPN-Server verbinden.

So könnte die Erreichbarkeit hergestellt werden. Die Anmelderin erachtet hieran jedoch als nachteilig, dass sämtlicher Verkehr über den zentralen Knoten-VPN-Server gehen muss. Dies kann dazu führen, dass nicht immer optimale Pfade genutzt werden. Darüber hinaus stellt zentrale Server einen "Single-Point-of-Failure" dar.

Es ist daher eine Aufgabe der vorliegenden Erfindung, eine Möglichkeit zur Gewährleistung einer Erreichbarkeit von Arbeitsknoten eines Clusters in einem segmentierten industriellen Netzwerk zu schaffen, die sich durch eine gute Pfadnutzung und gute Ausfallsicherheit auszeichnet.

Diese Aufgabe wird gelöst durch ein Verfahren zur Datenkommunikation in einem industriellen Netzwerk, an dem mehrere Arbeitsknoten eines Clusters teilnehmen, wobei das Netzwerk segmentiert ist wenigstens zwei der Knoten in verschiedenen Netzwerksegment angeordnet sind, bei dem
- ein Knoten-VPN-Netzwerk aufgebaut ist oder wird, über das mehrere oder alle Knoten des Clusters mit einem zentralen Knoten-VPN-Server verbunden sind, so dass die Knoten über den Knoten-VPN-Server jeweils andere Knoten des Clusters erreichen können,
- zwischen Knoten des Clusters Daten über den Knoten-VPN-Server übertragen werden,
- für wenigstens ein, bevorzugt jedes Paar von jeweils zwei Knoten des Clusters überwacht wird, wie viel Datenverkehr zwischen den beiden Knoten des wenigstens einen Paares über den Knoten-VPN-Server übertragen wird,
- für den Fall, dass zwischen den beiden Knoten wenigstens eines Paares in zumindest einer Richtung eine Verkehrsmenge und/oder Verkehrsrate beobachtet wird, welche einen Schwellwert gegebenenfalls über einen vorgegebene Zeitraum hinweg überschreitet, betroffenes Paar, geprüft wird, ob zwischen den beiden Knoten des wenigstens einen betroffenen Paares eine direkte Verbindung möglich ist, wobei zunächst geprüft wird, ob eine direkte Verbindung ohne VPN möglich ist, und für den Fall, dass dem nicht so ist, versucht wird, eine direkte VPN-Verbindung aufzubauen.

Die Erfindung ermöglicht eine dynamische Optimierung des Netzwerkverkehrs zwischen den Arbeitskonten eines im industriellen Umfeld betriebenen Clusters abhängig von der Netzwerklast der aktuellen Applikationen.

Die Erfindung bietet mehrere Vorteile. Einerseits wird die Leistungsfähigkeit eines verteilten Clusters auf einer industriellen, segmentierten Infrastruktur verbessert, da der einen Flaschenhals bildende Knoten-VPN-Server (kann auch als "Rendezvous-Server bezeichnet werden) bei Bedarf überbrückt und damit entlastet wird. Dies ermöglicht es insbesondere auch Applikationen auf einem verteilten Cluster ablaufen zu lassen, welche hohe Anforderungen an die Netzwerkbandbreite zwischen den Arbeitsknoten haben (z.B. Big-Data-Anwendungen, bei denen die Erfassung auf einem Knoten und die Verarbeitung auf einem anderen Knoten erfolgt). Die darunterliegende Netzwerkinfrastruktur wird entlastet, da weniger Verkehr über den Knoten-VPN-Server geleitet wird. Im Ergebnis werden mehr Applikationen auf einem in einem industriellen Netzwerk befindlichen, verteilten Cluster möglich. Da nicht mehr aller Verkehr ausschließlich über den zentralen Knoten-VPN-Server gehen muss, wird ein "Single-Point-of-Failure" vermieden.

Das industrielle Netzwerk ist nicht flach, sondern segmentiert, was insbesondere bedeutet, dass es in mehrere Netzwerksegmente unterteilt/segmentiert ist. Die Netzwerksegmente können auch als Subnetze bzw. Subnetzwerke bezeichnet werden. Bereiche bzw. Subnetzwerke des segmentierten Netzwerkes können durch Router und/oder Firewall(s) und/oder Proxy-Server miteinander verbunden bzw. voneinander getrennt sein. Die Arbeitsknoten sind auf zwei oder mehr Segmente verteilt. Wenigstens zwei der Arbeitsknoten sind insbesondere über einen Router und/oder eine Firewall und/oder einen Proxy-Server miteinander verbunden. In der Regel wird dies für mehr als zwei Knoten gelten.

Jeder Knoten, der über das Knoten-VPN-Netzwerk mit dem zentralen Knoten-VPN-Server verbunden werden soll, umfasst bzw. implementiert zweckmäßiger Weise einen VPN-Client.

Der Schwellwert, ab dem die Überprüfung der Möglichkeit einer direkten Verbindung unternommen wird, kann fest vorgegeben sein, etwa durch eine Policy oder auch durch einen prozentualen Anteil der Gesamtauslastung des Knoten-VPN-Servers.

Es kann vorgesehen sein, dass nicht sofort bei Erreichen des Schwellwertes die Überprüfung erfolgt, sondern erst, wenn der Schwellwert über einen vorgegebenen Zeitraum hinweg überschritten ist. Dann wird mit anderen Worten nicht auf jede "Spitze" reagiert, sondern erst, wenn die Datenauslastung für eine gewisse Zeit hoch ist.

Unter einer direkten Verbindung ist insbesondere eine solche Verbindung zu verstehen, die nicht über den Knoten-VPN-Server geht.

Eine direkte Verbindung ohne VPN ist insbesondere in dem Falle möglich, dass die im Netzwerk vorhandene Infrastruktur bereits IP-Konnektivität zwischen den beiden Knoten des wenigstens einen betroffenen Paares bereitstellt. Ist dies der Fall, wird zweckmäßiger Weise die direkte Verbindung für die Übertragung von Daten zwischen den Knoten (in eine oder auch beide Richtungen) genutzt. Dabei wird zumindest ein Teil des Datenverkehrs zwischen den Knoten des wenigstens einen betroffen Paares, der bisher über den Knoten-VPNA-Server geleitet wurde, über diese (direkte) Konnektivität geleitet.

Die Überprüfung, ob eine direkte Verbindung ohne VPN möglich ist, insbesondere eine direkte Konnektivität besteht, erfolgt bevorzugt, indem wenigstens einer der beiden Knoten des wenigstens einen betroffenen Paares den anderen Knoten des wenigstens einen betroffenen Paares anpingt.

Für den Fall, dass die Überprüfung, ob eine direkte Verbindung ohne VPN möglich ist ein negatives Ergebnis liefert, etwa ein Ping nicht erfolgreich ist, wird versucht, eine direkte VPN-Verbindung zwischen den beiden Knoten des wenigstens einen betroffenen Paares aufzubauen. Wenn möglich, wird zweckmäßiger Weise zwischen den beiden Knoten eine direkte VPN-Verbindung aufgebaut und für die Übertragung von Daten zwischen den Knoten genutzt.

Eine direkte VPN-Verbindung ist dabei eine VPN-Verbindung, die nicht über den Knoten-VPN-Server geht. Es handelt sich insbesondere um genau einen VPN-Tunnel, welcher die beiden Knoten des wenigstens einen betroffenen Paares verbindet. Die Verbindung über den Knoten-VPN-Server umfasst im Gegensatz dazu zwei VPN-Tunnel, einen zwischen dem einen Knoten und dem Server und einen zweiten zwischen dem anderen Knoten und dem Server.

Über die (jeweilige) Direktverbindung zwischen Knoten eines betroffenen Paares wird bevorzugt nur der Produktivverkehr zwischen Knoten übertragen. Mit anderen Worten betrifft die erfindungsgemäße Optimierung bevorzugt nur den Produktivverkehr. Der Datenverkehr von den Knoten des wenigstens einen betroffenen Paares zum Backend hingegen wird bevorzugt nicht über die (jeweilige) direkte Verbindung (ohne oder mit VPN) sondern (weiter) über den zentralen Knoten-VPN-Server übertragen. Bei dem Backend kann es sich insbesondere um ein vom Anwender bedientes System zur Verwaltung der Arbeitsknoten handeln.

Die zweistufige Überprüfung, ob eine direkte Verbindung (ohne oder mit VPN) möglich ist, muss nicht erfolgreich sein. Es ist denkbar, dass zwischen zwei Knoten weder eine direkte Verbindung ohne VPN noch eine direkte VPN-Verbindung möglich ist. In diesem Falle würde bzw. wird dann weiter der Weg über den Knoten-VPN-Server genutzt.

Es ist möglich, dass nur für ein bzw. bei einem Paar von Arbeitsknoten des Clusters ein Datenverkehr oberhalb einer zulässigen Grenze beobachtet wird oder auch für bzw. bei mehreren. Entsprechend kann es nur eines oder auch mehrere betroffene Paare von jeweils zwei Knoten geben, für das bzw. die geprüft wird, ob eine direkte Verbindung möglich ist.

Bevorzugt wird der Datenverkehr aller Knoten eines Clusters bzw. von allen Paaren mit je zwei Daten übertragenden bzw. austauschenden Knoten für die erfindungsgemäße Optimierung überwacht. Hat ein Cluster beispielsweise vier Arbeitsknoten, die beispielhaft mit A, B, C und D bezeichnet seien, und werden alle Knoten betrachtet, wird entsprechend bevorzugt der Datenverkehr zwischen den Paaren AB, BC, CD, DA, DB und AC überwacht.

Es ist auch nicht ausgeschlossen, dass einer oder mehrere an einem Netzwerk teilnehmende Knoten eines Clusters für die erfindungsgemäße Optimierung nicht betrachtet werden, beispielsweise Knoten, die dauerhaft inaktiv sind oder dergleichen.

Ist eine direkte Verbindung möglich, wird in zweckmäßiger Weiterbildung des erfindungsgemäßen Verfahrens für die Knoten des bzw. des jeweiligen betroffenen Paares das Routing angepasst. Dies erfolgt in bevorzugter Ausgestaltung, indem Routing-Informationen in den Knoten des bzw. des jeweiligen Paares derart geändert werden, dass zumindest ein Teil des Datenverkehrs zwischen den beiden Knoten des wenigstens einen betroffenen Paares nicht mehr über den Knoten-VPN-Server sondern über die direkte Verbindung (ohne oder mit VPN) geroutet werden kann bzw. geroutet wird.

In weiterer vorteilhafter Ausgestaltung wird der Datenverkehr über die direkte Verbindung (ohne oder mit VPN) zwischen den Knoten wenigstens eines betroffenen Paares, bevorzugt aller betroffener Paare überwacht. Für den Fall, dass dieser einen vorgegebenen Schwellwert, gegebenenfalls über einen vorgegebene Zeitraum hinweg, unterschreitet, wird bevorzugt die (jeweilige) direkte Verbindung insbesondere automatisch nicht mehr genutzt und die zuvor über die (jeweilige) direkte Verbindung übertragen Daten werden wieder über den Knoten-VPN-Server übertragen. Für den Fall, dass eine direkte VPN-Verbindung zwischen den Knoten aufgebaut wurde, wird diese bevorzugt wieder abgebaut. So kann die bzw. können die im Lichte hoher Auslastung aufgebaute(n) Direktverbindung(en) wieder abgebaut werden, wenn die hohe Auslastung zurückgegangen ist.

Eine direkte Verbindung ohne VPN zwischen den beiden Knoten des wenigstens einen betroffenen Paares ist insbesondere in demjenigen Falle möglich, dass eine Erreichbarkeit auf allen für ein zwischen den Knoten aufgebautes Overlay-Netzwerk relevanten TCP- und/oder UDP-Ports in den benötigten Richtungen gegeben ist. Unter einem Overlay-Netzwerk ist insbesondere in an sich bekannter Weise ein Netzwerk zu verstehen, das auf ein bestehendes Netzwerk aufsetzt (siehe z.B. https://de.wikipedia.org/wiki/Overlay-Netz). Als ein Beispiel für ein Overlay-Netzwerk sei Virtual Extensible LAN (VXLAN, siehe z.B. https://de.wikipedia.org/wiki/Virtual_Extensible_LAN) genannt.

Die verteilten Arbeitsknoten des Clusters sind bevorzugt klassischen Automatisierungskomponenten zugeordnet. Sie können verschiedene Aufgabe im industriellen Netzwerk übernehmen, beispielsweise ergänzend und/oder alternativ zu Automatisierungskomponenten des industriellen Netzwerkes Automatisierungsaufgaben. Sie können auch eine Vermittlerrolle einnehmen.

Eine weitere vorteilhafte Ausführungsform des erfindungsgemäßen Verfahrens zeichnet sich entsprechend dadurch aus, dass wenigstens einer der Arbeitsknoten des Clusters wenigstens einer an dem Netzwerk teilnehmenden industriellen Automatisierungskomponente zugeordnet ist. Die wenigstens eine Automatisierungskomponente hat bzw. übernimmt insbesondere in an sich bekannter Weise wenigstens eine industrielle Automatisierungsfunktion.

Eine Automatisierungskomponente kann eine Hardwarekomponente und/oder eine Softwarekomponente oder eine Kombination aus beidem sein. Automatisierungskomponenten sind beispielsweise: Steuerungen, etwa speicherprogrammierbare Steuerungen (SPS), I/O-Module, industrielle Kommunikationsgeräte, Komponenten für industrielle Netzwerke, Sensoren, Aktoren, Antriebe, HMI-Panels und andere industrielle Geräte, die häufig in der Prozess- oder Automatisierungsindustrie verwendet werden.

Ein Arbeitsknoten kann von der wenigstens einen Automatisierungskomponente, der er bevorzugt zugeordnet ist, stammende und/oder für die wenigstens eine Automatisierungskomponente bestimmte Automatisierungsdaten vermitteln. Alternativ oder zusätzlich kann er beispielsweise wenigstens eine Automatisierungsfunktion der wenigstens einen Automatisierungskomponente anstelle dieser übernehmen und/der wenigstens eine zu Automatisierungsfunktionen der wenigstens einen Automatisierungskomponente ergänzende Automatisierungsfunktion ausführen. Es kann auch sein, dass Cluster-Arbeitsknoten für ein "asset management" zum Einsatz kommen, insbesondere für das automatisierte Erfassen der installierten Automatisierungsgeräte und deren Einstellungen.

In ganz besonders bevorzugter Ausgestaltung ist wenigstens einer der Arbeitsknoten des Clusters, sind insbesondere alle Arbeitsknoten des Clusters durch (ein) Edge-Gerät(e), insbesondere Industrial-Edge-Gerät(e) gegeben. Unter einem Edge-Gerät ist bevorzugt ein Gerät zu verstehen, welches die bzw. wenigstens eine Funktion des Edge-Computings ausführt (zum Edge-Computing siehe z.B. https://de.wikipedia.org/wiki/Edge_Computing). Ein Industrial-Edge-Gerät kann beispielsweise durch einen Industrie-Computer gegeben sein, der eine Edge-Computing Funktion ausführt.

Alternativ oder zusätzlich kann wenigstens einer der Arbeitsknoten des Clusters dazu dienen, wenigstens eine diesem zugeordnete Automatisierungskomponente an eine Cloud anzubinden. Der oder die Cluster-Knoten dienen dann praktisch als Schnittstelle zur Cloud.

Es hat sich gezeigt, dass klassische Automatisierungskomponenten nicht immer ohne weiteres einer Cloud-Anbindung zugänglich sind und dieser Problematik kann dadurch begegnet werden, dass für die Anbindung Cluster-Arbeitsknoten verwendet werden.

Weiterhin bevorzugt sind und/oder werden auf die Arbeitsknoten des Clusters Arbeitslasten in Form von Software-Containern verteilt. Dies kann besonders bevorzugt mittels eines Container-Orchestrierungs-Tools erfolgen. Als Beispiel für ein solches sei Kubernetes genannt.

Es stehen verschiedene Möglichkeiten zur Verfügung, den Datenverkehr zwischen Knoten zu überwachen.

Beispielsweise kann ein Client-zu-Client-Modus genutzt werden, in welchem der Knoten-VPN-Server den Verkehr zwischen den Paaren von jeweils zwei Arbeitsknoten intern weiterleitet. In diesem Falle schließt die Überwachung des Datenverkehrs bevorzugt ein, dass der Knoten-VPN-Server die Verkehrsmenge zählt. Diese Information kann dann insbesondere in Form eines Services für ein Cluster-Orchestrierungs-Tool zur Verfügung gestellt werden.

Diese Variante hat sich als besonders geeignet erwiesen, wenn der Knoten-VPN-Server ein OpenVPN-Server ist.

Alternativ oder zusätzlich kann ein Modus genutzt werden, in dem die Pakte des Datenverkehrs zwischen den jeweils zwei Knoten der Paare an den Kernel des Knoten-VPN-Servers übergegeben und beispielsweise mittels iptables wieder in den VPN-Tunnel zum jeweiligen Ziel-Arbeitsknoten geschickt werden (insbesondere kein Client-zu-Client-Modus, zu iptables siehe beispielsweise https://de.wikipedia.org/wiki/Iptables). Die Überwachung des Datenverkehrs erfolgt dann bevorzugt im Kernel des Knoten-VPN-Servers. Auch in diesem Falle kann die Information über den Datenverkehr insbesondere in Form eines Dienstes/Services für ein Cluster-Orchestrierungs-Tool zur Verfügung gestellt werden.

Alternativ oder zusätzlich kann die Überwachung des Datenverkehrs in den Knoten selber erfolgen. Dies beispielsweise jeweils vor Eintritt in den VPN-Tunnel und/oder nach Verlassen dieses. Der Verkehr kann prinzipiell anhand verschiedener Kriterien erfasst werden, wie beispielsweise die Passage über eine VPN-Tunnel-Schnittstelle, aber auch anhand der Zieladresse (oder Zielbereich) der IP-Adresse(n) und damit unabhängig von der konkret passierten Netzwerk-Schnittstelle. Die Zuordnung des Verkehrs zu den Knoten bzw. Paaren kann anhand der Quell- und Zieladresse in den Datenpaketen erfolgen. Die Variante der Überwachung des Verkehrs in den Knoten stellt mit anderen Worten ein verteiltes Monitoring dar.

Es kann sein, dass für das wenigstens eine, bevorzugt jedes Paar von jeweils zwei Knoten des Clusters überwacht wird, wie viel Datenverkehr in einer Richtung übertragen wird. Bevorzugt wird jedoch für das wenigstens eine, bevorzugt jedes Paar von jeweils zwei Knoten des Clusters überwacht, wie viel Datenverkehr in beide Richtungen übertragen wird.

Es können prinzipiell sowohl Raten als auch Mengen überwacht bzw. gemessen werden. Bevorzugt wird der Verkehr erst einmal nach "Richtungen" aufgeschlüsselt überwacht bzw. erfasst. Dies kann aus dem Grunde der Fall sein, dass die eigentliche Erfassung in der Regel sehr "tief" unten im IP-Stack erfolgen wird und dort noch nicht zwingend das Verständnis für eine Gesamtheit besteht. Die Daten werden dann bevorzugt in darauf aufbauenden zeitlich unkritischen Programmen aggregiert und bspw. zu solchen Mengen zusammengefasst.

Eine weitere Ausführungsform des erfindungsgemäßen Verfahrens zeichnet sich dadurch aus, dass die Überprüfung, ob eine direkte Verbindung zwischen den beiden Knoten des wenigstens einen betroffenen Paares möglich ist, ein Probing zwischen den Knoten des wenigstens einen betroffenen Paares einschließt. Das Probing umfasst bevorzugt eine Testkommunikation.

Der Versuch des Aufbaus der direkten VPN-Verbindung zwischen den beiden Knoten des wenigstens einen betroffenen Paares geschieht bzw. erfolgt weiterhin bevorzugt durch das Deployment eines oder mehrerer entsprechender Dienste (Pods), insbesondere mit Host-Netzwerkzugang auf den Knoten des betroffenen Paares bzw. der betroffenen Paare. Deployment ist dabei insbesondere im Sinne von Verteilen einer VPN-Software (soweit noch nicht geschehen) und dem Starten der VPN-Software, beispielsweise eines entsprechenden Containers, zu verstehen. Insofern umfasst der Begriff "Deployment" bevorzugt mehr als nur einen reinen Verteilungsaspekt. Es können Kubernetes Deployments zum Einsatz kommen, die ein ganz bestimmter Typus von Kubernetes-Ressourcen (Kubernetes-Objekten) sind.

Ein Probing-Dienst kann dazu ausgebildet sein, die Konnektivität zwischen den Knoten für alle relevanten TCP- und/oder UDP-Ports und Richtungen zu bewerten. Die notwendigen Ports für Overlay bzw. VPN sind in der Regel bekannt. Es handelt sich insbesondere um vom jeweiligen Netzwerk-Verantwortlichen für einen Cluster und die daran angeschlossenen Netzwerke festgelegte Konfigurationswerte.

Auch der Aufbau einer direkten VPN-Verbindung zwischen den beiden Knoten des wenigstens einen betroffenen Paares kann in bevorzugter Weiterbildung das Deployment wenigstens eines Dienstes (Pods) einschließen bzw. durch das Deployment wenigstens eines Dienstes (Pods) erfolgen bzw. geschehen. Insbesondere geschieht der Aufbau durch Deployment von Diensten (Pods) auf den betreffenden Knoten im Host-Netzwerknamespace.

Auch die Anpassung des Routings in den beiden Knoten des wenigstens einen betroffenen Paares (zur Nutzung der Direktverbindung) kann das Deployment wenigstens eines Dienstes einschließen bzw. durch das Deployment wenigstens eines Dienstes erfolgen.

Das Deployment von Diensten kann beispielsweise mit den Mitteln eines Orchestrierungs-Systems erfolgen, etwa mit Kubernetes-Mitteln.

Ein weiterer Gegenstand der Erfindung ist ein Cluster-Arbeitsknoten, der zur Durchführung des erfindungsgemäßen Verfahrens ausgebildet und/oder eingerichtet ist. Bei einem Cluster-Arbeitsknoten kann es sich beispielsweise um ein (separates) Gerät bzw. eine (separate) Hardware-Komponente handeln. Selbstverständlich ist es auch möglich, dass ein Arbeitsknoten als "Software-Arbeitsknoten" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein Arbeitsknoten kann beispielsweise auch in eine Automatisierungskomponente, etwa eine Steuerung, oder in ein anderes Gerät integriert sein, dies sowohl in Form von Hardware- als auch Software. Ein Cluster-Arbeitsknoten kann auch durch einen entsprechend eingerichteten Industrie-Computer gegeben sein bzw. einen solchen umfassen.

Bevorzugt handelt es sich bei dem erfindungsgemäßen Arbeitsknoten um ein Industrial-Edge-Gerät. Ein solches kann beispielsweise durch einen Industrie-Computer gegeben sein, der eine Edge-Computing Funktion ausführt.

Darüber hinaus ist Gegenstand der Erfindung ein Cluster mit mehreren Arbeitsknoten, der zur Durchführung des erfindungsgemäßen Verfahrens ausgebildet und/oder eingerichtet ist. Dem Cluster ist zu dessen Steuerung bevorzugt ein zentraler Controller, beispielsweise Kubernetes-Master zugeordnet bzw. der Cluster umfasst einen solchen. Dem Cluster ist weiterhin bevorzugt ein Knoten-VPN-Server zugeordnet bzw. der Cluster umfasst einen solchen. Es kann vorgesehen sein, dass die Arbeitsknoten dazu ausgebildet und/oder eingerichtet sind, wenigstens eine industrielle Automatisierungsaufgabe auszuführen und/oder um eine Vermittlerrolle für Daten, die für wenigstens eine Automatisierungskomponente bestimmt sind und/oder, die von wenigstens einer Automatisierungskomponente stammen, zu übernehmen. Unter einer Vermittlerrolle ist dabei zu verstehen, dass die Daten weitergeleitet werden.

Die Erfindung betrifft auch ein industrielles Netzwerk, das zur Durchführung des erfindungsgemäßen Verfahrens ausgebildet und/oder eingerichtet ist. An dem erfindungsgemäßen Netzwerk nehmen bevorzugt mehrere Automatisierungskomponenten und mehrere zu einem Cluster gehörige Arbeitsknoten teil. Das Netzwerk ist weiterhin insbesondere strukturiert, umfasst bevorzugt wenigstens einen Router und/oder wenigstens eine Firewall und/oder wenigstens einen Proxy-Server. Es sind insbesondere wenigstens zwei Arbeitsknoten über wenigstens einen Router und/oder wenigstens eine Firewall und/oder wenigstens einen Proxy-Server miteinander verbunden. Die wenigstens zwei Arbeitsknoten liegen dann mit andren Worten in zwei verschiedenen, über wenigstens einen Router und/oder wenigstens eine Firewall und/oder wenigstens einen Proxy-Server miteinander verbundenen Abschnitten bzw. Bereichen bzw. Subnetzen des Netzwerkes. Das Netzwerk kann Ethernet-fähig sein, es kann sich insbesondere um ein Ethernet-basiertes Netzwerk handeln. Es ist auch nicht ausgeschlossen, dass es zumindest teil-/bereichsweise ein Funknetzwerk (z.B.: 4G/5G, WLAN, ...) ist.

Ein weiterer Gegenstand der vorliegenden Erfindung ist ferner ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: eine rein schematische Darstellung eines industriellen Netzwerkes, an dem mehrere Automatisierungskomponenten sowie Arbeitsknoten eines Clusters bildende Edge-Geräte teilnehmen,
- Figur 2: das Netzwerk aus Figur 1, wobei ein sternförmiges Knoten-VPN-Netzwerk aufgebaut ist, über das die Knoten mit einem zentralen Knoten-VPN-Server verbunden sind, und
- Figur 3: das Netzwerk aus Figur 1, wobei zusätzlich zu dem in Figur 2 dargestellten sternförmigen Knoten-VPN-Netzwerk zwischen zwei Paaren von Knoten direkte Verbinden aufgebaut sind.

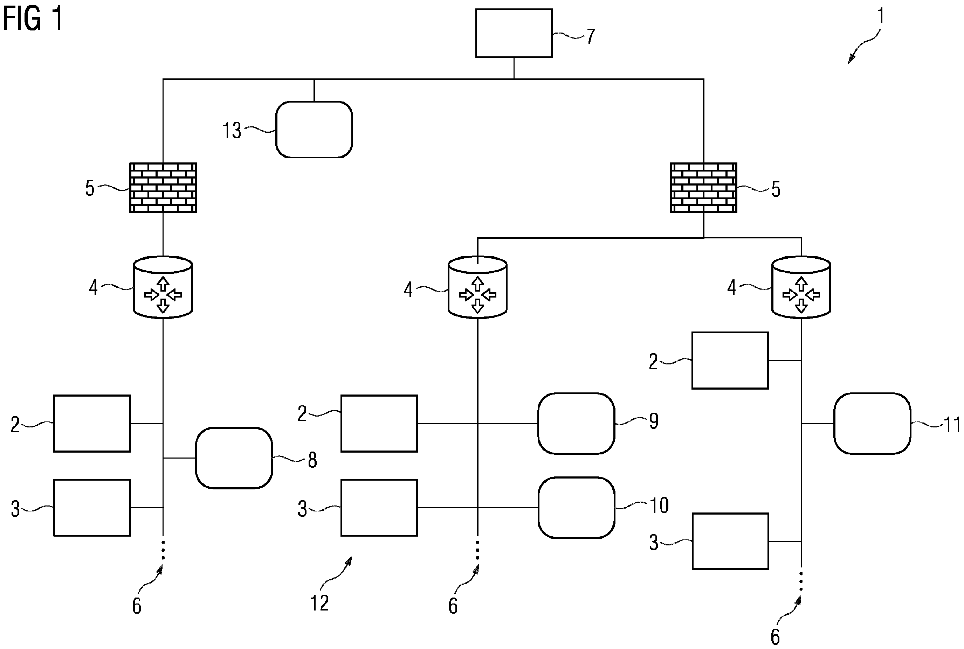

Die Figur 1 zeigt eine rein schematische Darstellung eines industriellen Netzwerkes 1, an dem eine Mehrzahl von Automatisierungskomponenten teilnimmt, die Bestandteile einer industriellen Automatisierungsanlage bilden. Bei dem dargestellten Ausführungsbeispiel ist die Automatisierungsanlage eine Prozessanlage, in welcher im Betrieb ein technischer Prozess abläuft. Selbstverständlich kann eine industrielle Automatisierungsanlage auch durch eine Produktionsanlage gegeben sein, die etwa der automatisierten Fertigung von Produkten dient.

Die in Figur 1 dargestellten Automatisierungskomponenten sind durch speicherprogrammierbare Steuerungen 2 (SPS) gegeben, den jeweils mehrere IO-Geräte 3 zugeordnet sind. In der Figur 1 ist unter jeder SPS 2 jeweils nur ein dieser zugeordnetes IO-Gerät 3 beispielhaft gezeigt. Durch die "..." ist angedeutet, dass jeder SPS 2 weitere IO-Geräte 3 zugeordnet sein können bzw. sind. Die IO-Geräte 3 sind in an sich bekannter Weise mit Feldgeräte darstellenden Sensoren und/oder Aktoren verbunden bzw. umfassen solche. Mit den Sensoren kann der in der Anlage ablaufende technische Prozess beobachtet und über die Aktoren auf diesen eingewirkt werden.

Im Betrieb empfängt die jeweilige SPS 2 von den ihr zugeordneten IO-Geräten 3 mittels Sensoren erfasste Messwerte, ermittelt unter Berücksichtigung dieser Stellwerte für die Aktoren und übermittelt diese ebenfalls zyklisch an die ihr zugeordneten Aktoren bzw. mit diesen verbundene oder diese umfassende IO-Geräte 3.

Es sei angemerkt, dass die Automatisierungsanlage neben den in der Figur 1 dargestellten Automatisierungskomponenten noch weitere Automatisierungskomponenten, u.a. weitere SPSen und/oder IO-Geräte und/oder HMI-Panels oder dergleichen umfassen kann bzw. umfasst.

Das industrielle Netzwerk 1 ist nicht flach, sondern umfasst eine Mehrzahl von Routern 4 und Firewalls 5. Das Netzwerk 1 umfasst bei dem dargestellten Ausführungsbeispiel drei Netzwerkzellen 6, die jeweils hinter einem bzw. unterhalb eines Routers 4 liegen. Die in Figur 1 linke Zelle 6 ist über den Router 4 und die darüber liegende Firewall 5 mit einem Internetzugang 7 verbunden. Die mittlere und rechte Zelle 6 sind über jeweils einen Router 4 und eine gemeinsame Firewall 5 mit dem Internetzugang 7 verbunden.

An dem industriellen Netzwerk 1 nehmen ferner mehrere, bei dem dargestellten Ausführungsbeispiel vier Arbeitsknoten 8-11 teil, die zu einem verteilten Cluster 9 gehören bzw. einen solchen bilden.

Konkret ist in der linken und rechten Zelle 6 jeweils einer der Arbeitsknoten 8-11 vorgesehen und in der mittleren Zelle 6 sind zwei Arbeitsknoten 8-11 angeordnet. Jeder der Knoten 8-11 wird bei dem dargestellten Ausführungsbeispiel durch ein Edge-Gerät gebildet. Der Arbeitsknoten 8 in der linken Zelle 6 ist den Automatisierungskomponenten 2, 3 in dieser Zelle zugeordnet. Dies gilt gleichermaßen für den Knoten 8 in der rechten Zelle 6. In der mittleren Zelle sind zwei Arbeitsknoten 8 vorgesehen, von denen einer der PLC 2 und der andere den IO-Geräten 3 zugeiordnet ist. Dies ist rein beispielhaft zu verstehen.

Auf die durch Edge-Geräte gegebenen Arbeitsknoten 8-11 sollen Arbeitslasten in Form von Software-Containern (Pods) verteilt werden. Dies soll mittels eines Container-Orchestrierungs-Tools geschehen, das vorliegend durch Kubernetes gegeben ist.

Der Cluster 12 mit seinen Arbeitsknoten 8-11 wird dabei in der Regel von wenigstens einem Controller bzw. Master gesteuert, im Falle von Kubernetes über wenigstens einen sogenannten "Kubernetes-Master". Vorliegend wird Kubernetes auf einer zentralen Cluster-Management-Einheit 13 ausgeführt, welche auch den "Kubernetes-Master" implementiert.

Rein beispielhaft für eine Aufgabe bzw. Funktion, die von bzw. mittels auf Arbeitsknoten 8-11 verteilten Software-Containern ausgeführt werden kann sei ein "asset management", also das automatisierte Erfassen der installierten Automatisierungsgeräte und deren Einstellungen - beispielsweise zur Dokumentation und zur automatisierten Überwachung auf Veränderungen und Ausfälle, genannt. Dies ist nicht einschränken zu verstehen. Es können selbstverständlich auch diverse andere Funktionen bzw. Aufgaben alternativ oder zusätzlich realisiert werden.

In den Figuren sind die zum Cluster 9 gehörigen bzw. diesem zugeordneten Komponenten zur Abgrenzung mit abgerundeten Ecken darstellt.

Kubernetes geht von einem Netzwerk aus, in dem jeder Knoten 8-11 des Clusters 12 jeden anderen Knoten 8-11 des Clusters 12 IP-technisch erreichen kann. Es wird davon ausgegangen, dass Kommunikation "jeder zu jedem" auf verschiedenen UDP/TCP-Porst möglich ist.

Kubernetes baut zum einen ein Overlay-Netzwerk zwischen den Knoten 8-11 auf, beispielsweise ein VXLAN. Dies setzt eine bidirektionale Erreichbarkeit zwischen den Arbeitsknoten 8-11 voraus. Zusätzlich müssen vom Backend (z.B. Rancher) zu jedem Knoten 8-11 Verbindungen aufgebaut werden.

Bei der Situation in dem industriellen Netzwerk 1 gemäß Figur ist problematisch, dass das Netzwerk 1 nicht flach ist, sondern die Router 4 und Firewalls 5 umfasst.

Bei dem offenen Industrial-Ethernet-Standard für die Automatisierung, der bei dem beschriebenen Ausführungsbeispiel zum Einsatz kommt, ist dies u.a. durch das Zellenschutzkonzept motiviert. Die pauschale Erreichbarkeit der Knoten 8-11 zueinander ist im Lichte dessen nicht gegeben. Die bidirektionalen Verbindungen werden durch die Router 4 und Firewalls 5 verhindert. Diese Schutzkonzepte sollen nicht geändert werden.

Um dennoch die Erreichbarkeit zu gewährleisten, die das Management über Kubernetes voraussetzt, wird ein Ausführungsbeispiel des erfindungsgemäßen Verfahrens durchgeführt.

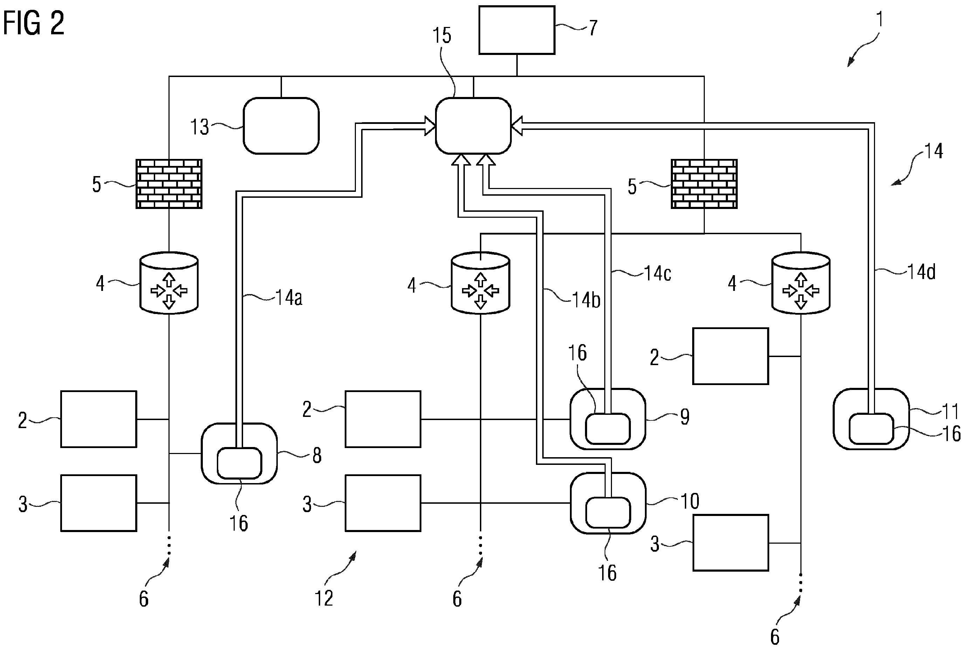

Dabei wird ein Knoten-VPN-Netzwerk 14 aufgebaut, über das alle Knoten 8-11 des Clusters 12 mit einem zentralen Knoten-VPN-Server 15 verbunden sind, so dass jeder der Knoten 8 über den Knoten-VPN-Server 15 jeweils alle anderen Knoten 8-11 des Clusters 12 erreichen kann. Dies ist in Figur 2 - wiederum rein schematisch - dargestellt. Das VPN-Netzwerk 14 umfasst vier VPN-Tunnel 14a-14d, über welche jeder Knoten 8-11 mit dem Server 15 verbunden ist.

Jeder der Arbeitsknoten 8-11 umfasst bzw. implementiert dazu einen VPN-Client 16 (siehe Figur 2).

Zwischen Knoten 8-11 des Clusters 12 werden Daten über den Knoten-VPN-Server 15 übertragen und es wird für jedes Paar von jeweils zwei Knoten 8-11 des Clusters 12 überwacht, wie viel Datenverkehr zwischen den beiden Knoten 8-11 des jeweiligen Paares über den Knoten-VPN-Server 15 übertragen wird.

Jeder der vier Knoten 8-11 bildet jeweils mit jedem anderen Knoten 8-11 ein Paar. Vorliegend ergeben sich die zu betrachtenden Paare mit den Knoten 8 und 9, 9 und 10, 10 und 11, 8 und 11, 8 und 10 sowie 9 und 11. Alle Knoten 8-11 sind entsprechend Teil mehrerer Paare. Der Datenverkehr aller dieser Paare wird laufend überwacht.

Es stehen prinzipiell verschiedene Möglichkeiten zur Verfügung, diese Überwachung durchzuführen.

Beispielsweise kann ein Client-zu-Client-Modus genutzt werden, in welchem der Knoten-VPN-Server 15 den Verkehr zwischen den Paaren von jeweils zwei Arbeitsknoten 8-11 intern weiterleitet. In diesem Falle schließt die Überwachung des Datenverkehrs bevorzugt ein, dass der Knoten-VPN-Server 15 die Verkehrsmenge zählt. Diese Information kann dann insbesondere in Form eines Services für ein Cluster-Orchestrierungs-Tool, vorliegend für Kubernetes zur Verfügung gestellt werden. Diese Variante hat sich als besonders geeignet erwiesen, wenn der Knoten-VPN-Server ein OpenVPN-Server ist.

Alternativ oder zusätzlich kann ein Modus genutzt werden, in dem die Pakte des Datenverkehrs zwischen den jeweils zwei Knoten 8-11 der Paare an den Kernel des Knoten-VPN-Servers 15 übergegeben und beispielsweise mittels iptables wieder in den VPN-Tunnel zum jeweiligen Ziel-Arbeitsknoten 8-11 geschickt werden. Die Überwachung des Datenverkehrs erfolgt dann bevorzugt im Kernel des Knoten-VPN-Servers 15. Auch in diesem Falle kann die Information über den Datenverkehr insbesondere in Form eines Dienstes/Services für ein Cluster-Orchestrierungs-Tool, vorliegend Kubernetes, zur Verfügung gestellt werden.

Alternativ oder zusätzlich kann die Überwachung des Datenverkehrs in den Knoten 8-11 selber erfolgen. Dies insbesondere jeweils vor Eintritt in den VPN-Tunnel und/oder nach Verlassen dieses. Die Zuordnung des Verkehrs zu den Knoten 8-11 bzw. Paaren kann dann anhand der Quell- und Zieladresse in den Datenpaketen erfolgen. Diese Variante stellt mit anderen Worten ein verteiltes Monitoring dar.

Die Überwachung des Datenverkehrs schließt bevorzugt das Messen der Datenströme mit ein.

Es wird der Verkehr in beiden Richtungen zwischen den Knoten 8-11 der Paare überwacht. Hierbei können prinzipiell sowohl Raten als auch Mengen gemessen werden. Der Verkehr wird dabei bevorzugt erst einmal nach "Richtungen" aufgeschlüsselt überwacht bzw. erfasst, dass die eigentliche Erfassung in der Regel sehr "tief" unten im IP-Stack erfolgt und dort noch nicht zwingend das Verständnis für eine Gesamtheit besteht. Die Daten werden dann bevorzugt in darauf aufbauenden zeitlich unkritischen Programmen aggregiert und bspw. zu solchen Mengen zusammengefasst.

Für den Fall, dass zwischen den beiden Knoten 8-11 wenigstens eines Paares in wenigstens einer Richtung eine Verkehrsmenge und/oder Verkehrsrate beobachtet wird, welche einen Schwellwert (gegebenenfalls über einen vorgegebene Zeitraum hinweg) überschreitet - betroffenes Paar - wird geprüft, ob zwischen den beiden Knoten 8-11 dieses Paares eine direkte Verbindung 17 möglich ist, wobei zunächst geprüft wird, eine direkte Verbindung 17 ohne VPN möglich ist, und für den Fall, dass dem nicht so ist, versucht wird, eine direkte VPN-Verbindung aufzubauen. Unter einer direkten Verbindung 17 ist dabei eine solche Verbindung zu verstehen, die nicht über den Knoten-VPN-Server 15 geht.

Es sei angemerkt, dass in der Regel das Überschreiten der Verkehrsmenge und/oder Verkehrsrate in eine Richtung ausreicht, weil Kommunikation häufig asymmetrisch ist.

Mit anderen Worten wird "on-demand", bei hoher Auslastung der Knoten-VPN-Server 15 - sofern für das oder die betroffenen Paare möglich - überbrückt.

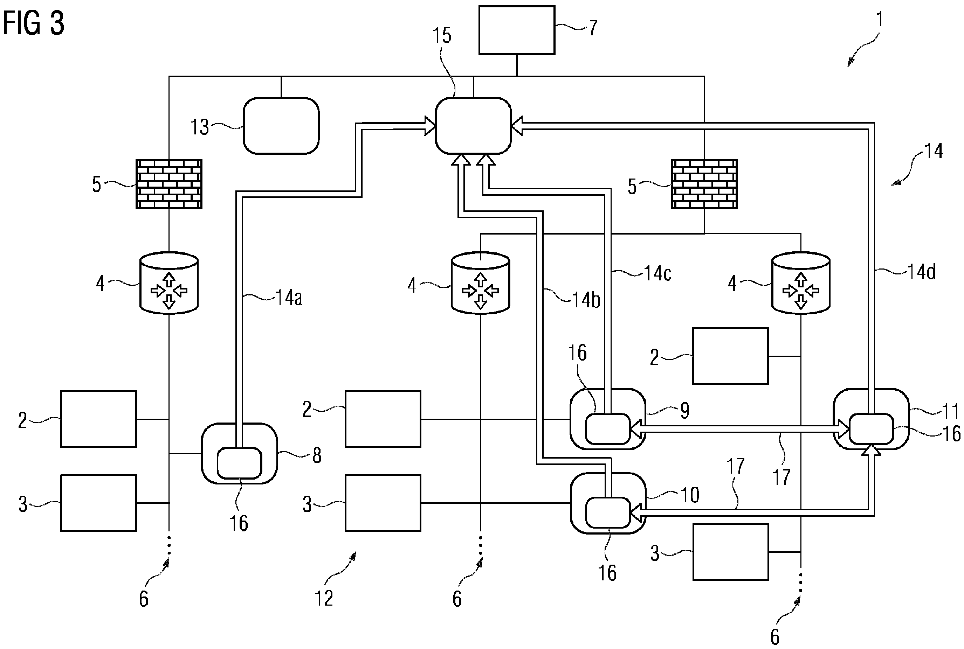

Dies ist in Figur 3 schematisch veranschaulicht. Bei dem dargestellten Ausführungsbeispiel wird durch die Überwachung zwischen den Knoten 9 und 11 sowie zwischen den Knoten 10 und 11 eine hohe Datenauslastung registriert. Es liegen also zwei betroffene Paare vor, nämlich das Paar mit den Knoten 9 und 11 sowie das Paar mit den Knoten 10 und 11 (der Knoten 11 ist Teil von beiden Paaren).

Eine direkte Verbindung ohne VPN zwischen den beiden Knoten 9-11 des jeweiligen betroffenen Paares ist möglich und kann genutzt werden, wenn die im Netzwerk vorhandene Infrastruktur bereits IP-Konnektivität zwischen den beiden Knoten 9-11 des jeweiligen betroffenen Paares bereitstellt. Insbesondere, wenn eine Erreichbarkeit auf allen für das zwischen den Knoten 9-11 aufgebaute Overlay-Netzwerk relevanten TCP- und/oder UDP-Ports in den benötigten Richtungen gegeben ist.

Ist dies nicht der Fall, wird der Weg über eine direkte VPN-Verbindung versucht. Eine direkte VPN-Verbindung ist dabei eine VPN-Verbindung, die nicht über den Knoten-VPN-Server 15 geht. Es handelt sich um genau einen VPN-Tunnel, welcher die beiden Knoten 9-11 eines betroffenen Paares verbindet.

Vorliegend ist eine direkte Verbindung ohne VPN für beide Paare erfolgreich und es werden zwischen den Knoten 9-11 beider betroffenen Paare direkte Verbindungen 17 ohne VPN genutzt.

Für die Knoten 9-11 der beiden betroffenen Paare wird das Routing angepasst, indem Routing-Informationen in den Knoten 9-11 der betroffenen Paare derart geändert werden, dass zumindest ein Teil des Datenverkehrs zwischen den beiden Knoten 9-11 des jeweiligen betroffenen Paares nicht mehr über den Knoten-VPN-Server 15 sondern über die direkte Verbindung 17 geroutet werden kann bzw. geroutet wird.

Es sei angemerkt, dass die klassischen Automatisierungskomponenten 2, 3 die ihnen zugeordneten Anlagen- und Infrastruktur-Adressen nutzen. Nicht nur die PLCs 2 und IO Devices 3 haben solche Adressen, sondern erst einmal auch die Knoten 8-11 und der Knoten-VPN-Server 15, die Router 4, Firewalls 5 usw.

Die zum Cluster gehörigen Komponenten, konkret die Knoten 8-11 sowie die Cluster-Management-Einheit 13 und der Knoten-VPN-Server 15 erhalten dann noch zusätzliche Adressen eines getrennten Adressbereich (bzw. mehrere Adressbereiche), die den anderen Teilnehmern unbekannt sind und im Normalfall dort auch nicht geroutet, sondern geblockt werden. In den Figuren ist dieser getrennte Adressbereich dadurch angedeutet, dass die zugehörigen Komponenten mit abgerundeten Ecken dargestellt sind.

Diese Adressen werden zwischen den Komponenten mit abgerundeten Ecken geroutet und zwar hier insbesondere unter Zuhilfenahme der direkten Verbindungen bzw. Tunnel 17. Die Tunnel stellen die Verbindung zwischen den Teilen dieses Adressbereiches her.

Die Tunnel 17 transportieren den Verkehr dieses getrennten Adressbereiches dann mittels der bisherigen Anlagen- und Infrastruktur-Adressen, was für die neuen bzw. zusätzlichen Adressen jedoch unsichtbar ist.

Die Adressen des getrennten Adressbereiches können selbst noch einmal wieder strukturiert sein, beispielsweise in ein Underlay und ein VXLAN Overlay.

Die Überprüfung der Möglichkeit r direkter Verbindungen 17 zwischen den jeweils zwei Knoten 9-11 der betroffenen Paare schließt ein Probing zwischen den Knoten 9-11 ein. Das Probing umfasst bevorzugt eine Testkommunikation. Das Probing geschieht durch das Deployment eines oder mehrerer entsprechender Dienste (Pods), insbesondere mit Host-Netzwerkzugang auf den Knoten 9-11 der betroffenen Paare. Es kann ein Ping erfolgen.

Ein solcher Probing-Dienst kann dazu ausgebildet sein, die Konnektivität zwischen den Knoten für alle relevanten TCP- und/oder UDP-Ports und Richtungen zu bewerten. Die notwendigen Ports für Overlay bzw. VPN sind in der Regel bekannt.

Es sei angemerkt, dass auch der Aufbau direkter VPN-Verbindungen zwischen Knoten 9-11 betroffener Paare in dem Falle, dass direkte Verbindungen 17 ohne VPN nicht möglich sind bzw. sein sollten, bevorzugt das Deployment wenigstens eines Dienstes (Pods) einschließt bzw. t durch das Deployment wenigstens eines Dienstes (Pods) geschieht. Insbesondere geschieht der Aufbau durch Deployment von Diensten (Pods) auf den betreffenden Knoten 9-11 im Host-Netzwerknamespace.

Auch die Anpassung des Routings in den Knoten 9-11 der betroffenen Paare (zur Nutzung der Direktverbindungen 17) geschieht durch das Deployment wenigstens eines Dienstes.

Das Deployment von Diensten erfolgt mit den Mitteln des Orchestrierungs-Tools, vorliegend mit Kubernetes-Mitteln.

Über die Direktverbindungen 17 wird nur der Produktivverkehr zwischen den Knoten 9-11 der betroffenen Paare übertragen. Die erfindungsgemäße Optimierung betrifft also nur den Produktivverkehr. Der Datenverkehr von den Knoten 9-11 der betroffenen Paare zum Backend hingegen wird nicht über die jeweilige direkte Verbindung 17, sondern weiterhin über den zentralen Knoten-VPN-Server 15 übertragen.

Im Anschluss an die Nutzungsaufnahme der direkten Verbindungen 17 wird der Datenverkehr zwischen den Knoten 9-11 der betroffenen Paare über diese ebenfalls überwacht. Für den Fall, dass der Verkehr über die (jeweilige) Direktverbindung 17 einen vorgegebenen Schwellwert - gegebenenfalls über einen vorgegebene Zeitraum hinweg - unterschreitet, wird die Nutzung der jeweiligen direkten Verbindung 17 wieder eingestellt und die Produktivdaten, die dann wieder in geringerer Menge zu übertragen sind, werden wieder über das sternförmige VPN-Netzwerk 14 und den zentralen Server 15 geleitet. Für den Fall, dass direkte VPN-Verbindungen aufgebaut wurden, werden diese bevorzugt wieder abgebaut.

Es sei angemerkt, dass die Knoten 8-11, die zur Durchführung des beschriebenen Ausführungsbeispiels des erfindungsgemäßen Verfahrens ausgebildet und eingerichtet sind, Ausführungsbeispiele erfindungsgemäßer Arbeitsknoten darstellen. Der die Arbeitsknoten 8-11 umfassende Cluster 12, für den dies auch gilt, stellt ferner ein Ausführungsbeispiel eines erfindungsgemäßen Clusters dar.

Schließlich ist das dargestellte industrielle Netzwerk 1 ein Ausführungsbeispiel eines erfindungsgemäßen Netzwerkes.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem industriellen Netzwerk (1), an dem mehrere Arbeitsknoten (8-11) eines Clusters (12) teilnehmen, wobei wenigstens zwei der Knoten (8-11) über wenigstens einen Router (4) und/oder wenigstens eine Firewall (5) und/oder wenigstens einen Proxy-Server miteinander verbunden sind, bei dem
- ein Knoten-VPN-Netzwerk (14) aufgebaut ist oder wird, über das mehrere oder alle Knoten (8-11) des Clusters (12) mit einem zentralen Knoten-VPN-Server (15) verbunden sind, so dass die Knoten (8-11) über den Knoten-VPN-Server (15) jeweils andere Knoten (8-11) des Clusters (12) erreichen können,
- zwischen Knoten (8-11) des Clusters (12) Daten über den Knoten-VPN-Server (15) übertragen werden,
- für wenigstens ein Paar von zwei Knoten (8-11), bevorzugt jedes Paar von jeweils zwei Knoten (8-11) des Clusters (12) überwacht wird, wie viel Datenverkehr zwischen den beiden Knoten (8-11) des wenigstens einen Paares über den Knoten-VPN-Server (15) übertragen wird,
- für den Fall, dass zwischen den beiden Knoten (8-11) wenigstens eines Paares in wenigstens einer Richtung eine Verkehrsmenge und/oder Verkehrsrate beobachtet wird, welche einen Schwellwert gegebenenfalls über einen vorgegebene Zeitraum hinweg überschreitet, betroffenes Paar, geprüft wird, ob zwischen den beiden Knoten (8-11) des wenigstens einen betroffenen Paares eine direkte Verbindung (17) möglich ist, wobei zunächst geprüft wird, eine direkte Verbindung ohne VPN möglich ist, und für den Fall, dass dem nicht so ist, versucht wird, eine direkte VPN-Verbindung aufzubauen.

2. Verfahren nach Anspruch 1,
**dadurch gekennzeichnet, dass**
für die Übertragung von Daten zwischen den Knoten (8-11) wenigstens eines betroffenen Paares eine direkte Verbindung (17) ohne VPN genutzt wird, und/oder zwischen den beiden Knoten (8-11) wenigstens eines betroffenen Paares eine direkte VPN-Verbindung (17) aufgebaut und für die Übertragung von Daten zwischen den Knoten (8-11) genutzt wird.

3. Verfahren nach Anspruch 2,
**dadurch gekennzeichnet, dass**
Produktivdaten über die direkte Verbindung (17) zwischen den beiden Knoten (8-11) des wenigstens einen betroffenen Paares übertragen werden.

4. Verfahren nach Anspruch 2 oder 3,
**dadurch gekennzeichnet, dass**
für die Knoten (8-11) des wenigstens einen betroffenen Paares das Routing angepasst wird, insbesondere, indem Routing-Informationen in den Knoten (8-11) des wenigstens einen betroffenen Paares derart geändert werden, dass zumindest ein Teil des Datenverkehrs zwischen den beiden Knoten (8-11) des wenigstens einen betroffenen Paares nicht mehr über den Knoten-VPN-Server (15) sondern über die direkte Verbindung (17) geroutet werden kann bzw. geroutet wird.

5. Verfahren nach einem der Ansprüche 2 bis 4,
**dadurch gekennzeichnet, dass**
der Datenverkehr über die direkte Verbindung (17) zwischen den Knoten (8-11) wenigstens eines betroffenen Paares überwacht wird, und für den Fall, dass dieser einen vorgegebenen Schwellwert gegebenenfalls über einen vorgegebene Zeitraum hinweg unterschreitet, bevorzugt die direkte Verbindung (17) nicht mehr genutzt und die zuvor über die direkte Verbindung (17) übertragen Daten wieder über den Knoten-VPN-Server (15) übertragen werden.

6. Verfahren nach einem der Ansprüche 2 bis 5,
**dadurch gekennzeichnet, dass**
Datenverkehr von den Knoten (8-11) des wenigstens einen betroffenen Paares zum Backend nicht über die direkte Verbindung (17) sondern über den zentralen Knoten-VPN-Server (15) übertragen wird.

7. Verfahren nach einem der vorhergehenden Ansprüche,
**dadurch gekennzeichnet, dass**
eine direkte Verbindung (17) ohne VPN zwischen den beiden Knoten (8-11) des wenigstens einen betroffenen Paares aufgebaut möglich ist, wenn eine Erreichbarkeit auf allen für ein zwischen den Knoten (8-11) aufgebautes Overlay-Netzwerk relevanten TCP- und/oder UDP-Ports in den benötigten Richtungen gegeben ist.

8. Verfahren nach einem der vorhergehenden Ansprüche,
**dadurch gekennzeichnet, dass**
wenigstens einer der Knoten (8-11) des Clusters (12) wenigstens einer an dem Netzwerk (1) teilnehmenden industriellen Automatisierungskomponente (2, 3) zugeordnet ist, und der wenigstens eine Knoten (8-11) von der wenigstens einen Automatisierungskomponente (2, 3) stammende und/oder für die wenigstens eine Automatisierungskomponente (2, 3) bestimmte Automatisierungsdaten vermittelt und/oder wenigstens eine Automatisierungsfunktion der wenigstens einen Automatisierungskomponente (2, 3) anstelle dieser übernimmt und/der wenigstens eine zu Automatisierungsfunktionen der wenigstens einen Automatisierungskomponente (2, 3) ergänzende Automatisierungsfunktion ausführt.

9. Verfahren nach einem der vorhergehenden Ansprüche,
**dadurch gekennzeichnet, dass**
wenigstens einer der Knoten (8-11) des Clusters (12) durch ein Edge-Gerät gegeben ist, und/oder wenigstens einer der Knoten (8-11) des Clusters (12) dazu dient, wenigstens eine diesem zugeordnete Automatisierungskomponente (2, 3) an eine Cloud anzubinden.

10. Verfahren nach einem der vorhergehenden Ansprüche,
**dadurch gekennzeichnet, dass**
auf die Knoten (8-11) des Clusters (12) Arbeitslasten in Form von Software-Containern verteilt sind und/oder werden, bevorzugt mittels eines Container-Orchestrierungs-Tools.

11. Verfahren nach einem der vorhergehenden Ansprüche,
**dadurch gekennzeichnet, dass**
ein Client-zu-Client-Modus genutzt wird, in welchem der Knoten-VPN-Server (15) den Verkehr zwischen den Paaren von jeweils zwei Knoten (8-11) intern weiterleitet, und die Überwachung des Datenverkehrs bevorzugt einschließt, dass der Knoten-VPN-Server (15) die Verkehrsmenge zählt und diese Information insbesondere in Form eines Services für ein Container-Orchestrierungs-Tool zur Verfügung stellt.

12. Verfahren nach einem der vorhergehenden Ansprüche,
**dadurch gekennzeichnet, dass**
ein Modus genutzt wird, in dem die Pakte des Datenverkehrs zwischen den jeweils zwei Knoten (8-11) der Paare an den Kernel des Knoten-VPN-Servers (15) übergegeben wieder in den VPN-Tunnel zum jeweiligen Ziel-Knoten (8-11) geschickt werden, und die Überwachung des Datenverkehrs im Kernel des Knoten-VPN-Servers (15) erfolgt, und diese Information insbesondere in Form eines Services für ein Container-Orchestrierungs-Tool zur Verfügung stellt.

13. Verfahren nach einem der vorhergehenden Ansprüche,
**dadurch gekennzeichnet, dass**
die Überwachung des Datenverkehrs in den Knoten (8-11) selber erfolgt.

14. Verfahren nach einem der vorhergehenden Ansprüche,
**dadurch gekennzeichnet, dass**
die Überprüfung der Möglichkeit einer direkten Verbindung (17) zwischen den beiden Knoten (8-11) des wenigstens einen betroffenen Paares ein Probing zwischen den Knoten (8-11) des wenigstens einen betroffenen Paares einschließt.

15. Verfahren nach einem der vorhergehenden Ansprüche,
**dadurch gekennzeichnet, dass**
die Überprüfung der Möglichkeit einer direkten Verbindung (17) zwischen den beiden Knoten (8-11) des wenigstens einen betroffenen Paares und/oder der Aufbau einer direkten VPN-Verbindung (17) zwischen den beiden Knoten (8-11) des wenigstens einen betroffenen Paares und/oder die Anpassung des Routings in den beiden Knoten (8-11) des wenigstens einen betroffenen Paares das Deployment wenigstens eines Dienstes einschließt bzw. durch das Deployment wenigstens eines Dienstes erfolgt.

16. Cluster-Arbeitsknoten (8-11), der zur Durchführung des Verfahrens nach einem der Ansprüche 1 bis 15 ausgebildet und/oder eingerichtet ist.

17. Cluster (12) mit mehreren Arbeitsknoten (8-11), der zur Durchführung des Verfahrens nach einem der Ansprüche 1 bis 15 ausgebildet und/oder eingerichtet ist.

18. Industrielles Netzwerk (1), das zur Durchführung des Verfahrens nach einem der Ansprüche 1 bis 15 ausgebildet und/oder eingerichtet ist.

19. Computerprogramm umfassend Programmcode-Mittel zur Durchführung des Verfahrens nach einem der Ansprüche 1 bis 15.

20. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 15 durchzuführen.
